# EUROPEAN PATENT SPECIFICATION

(11) **EP 2 357 547 B1**
(45) Date of publication and mention of the grant of the patent: **26.03.2014**
(21) Application number: 10150060.1
(22) Date of filing: 04.01.2010
(51) Int. Cl.: G06F 3/041

(54) **Portable electronic device and method of controlling same**
Tragbare elektronische Vorrichtung und Steuerungsverfahren dafür
Dispositif électronique portable et son procédé de contrôle

(43) Date of publication of application: 17.08.2011
(73) Proprietor: BlackBerry Limited, Waterloo, ON N2K 0A7 (CA)
(72) Inventor: Tout, Nigel David, Waterloo Ontario N2L 5R9 (CA)
(74) Representative: Fennell, Gareth Charles

(56) References cited:
- US-A1- 2003 214 485
- US-A1- 2006 028 095
- US-A1- 2008 238 884
- US-A1- 2009 066 673

## Description

### FIELD OF TECHNOLOGY

The present disclosure relates to portable electronic devices, including but not limited to portable electronic devices having touch screen displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

US 2003/214485 discloses a method for determining a touch location on a touch screen. The touch screen is defined by a plurality of force sensors disposed to measure a signal indicative of a touch force component that is perpendicular to a touch surface. The method includes providing calibration parameters for the touch screen acquired using the force sensors and the touch surface. The calibration parameters characterize an error in an expected touch signal associated with mechanical distortion of the touch screen. A force responsive touch signal having the error is detected and touch location determined using the calibration parameters to compensate for the error.

The expected touch signal is generated by placing a known test weight on the touch surface such that its centre of gravity falls over each of the known locations of the force sensors in succession.

US 2009/066673 discloses a software compensation method that allows a touch sensitive display to be built using low-cost FSR sensors. One embodiment concerns a portable electronic device having a touch-sensitive display resting on differentially-mounted force sensing resistors and being equipped with a haptic response generator. For the linearization and homogenization of force sensor data a method is proposed that comprises the application of a known test force, e.g. by utilizing a calibration station in the production line of the device. Then, the force sensors are calibrated based on the measurements of the force sensors and the known test force.

US 2008/238884 discloses a touchscreen that includes a display area of the touchscreen, a set of edge sensors at boundary locations of the display area of the touchscreen, and a set of electronics to determine a location of a force and a magnitude of the force applied on the display area of the touchscreen using an algorithm that considers measurements of the set of edge sensors.

US 2006/028095 discloses a piezoelectric composite device including a feeding electrode, a common electrode, a signal detecting electrode, a first piezoelectric element joined between the feeding electrode and the common electrode, and a second piezoelectric element joined between the common electrode and the signal detecting electrode. A predetermined voltage is supplied between the feeding electrode and the common electrode and a force detection signal based on an external force is extracted from the detecting electrode.

Improvements in devices with touch-sensitive displays are desirable.

### SUMMARY

According to a first aspect of the invention, a method is provided that includes: when a touch is not detected on a touch-sensitive display of a portable electronic device, applying, utilizing an actuator within the portable electronic device, a force on the touch-sensitive display of the portable electronic device; measuring, utilizing a force sensor, a value resulting from the force at the force sensor; calibrating the force sensor based on the value and a known magnitude of the force at the force sensor.

According to a second aspect of the invention, a computer-readable medium is provided that has computer-readable code executable by at least one processor of a portable electronic device to perform the above method.

According to a third aspect of the invention, an electronic device is provided that includes: a touch-sensitive display; an actuator configured to apply a force to the touch-sensitive display; a force sensor configured to determine a value resulting from the force; and at least one processor operably connected to the touch-sensitive display, the actuator, and the force sensor and configured to calibrate the force sensor based on the value and a known magnitude of the force at the force sensor when a touch is not detected on the touch-sensitive display.

### BRIEF DESCRIPTION OF THE DRAWINGS

FIG. 1 is a block diagram of a portable electronic device in accordance with the present disclosure.
FIG. 2 illustrates a front view of a portable electronic device in accordance with the present disclosure.
FIG. 3 illustrates a cross-sectional view through the line 202 of FIG. 2 in accordance with the present disclosure.
FIG. 4 is a functional block diagram showing components of the portable electronic device in accordance with the present disclosure.
FIG. 5 is a flow chart illustrating a method of controlling a portable electronic device in accordance with the present disclosure.

### DETAILED DESCRIPTION

The following describes an electronic device and a method including applying, utilizing an actuator of a portable electronic device, a force of known magnitude to a touch-sensitive display of the portable electronic device, measuring a value resulting from the force at at least one force sensor, and calibrating the at least one force sensor based on the value and the magnitude of the force.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

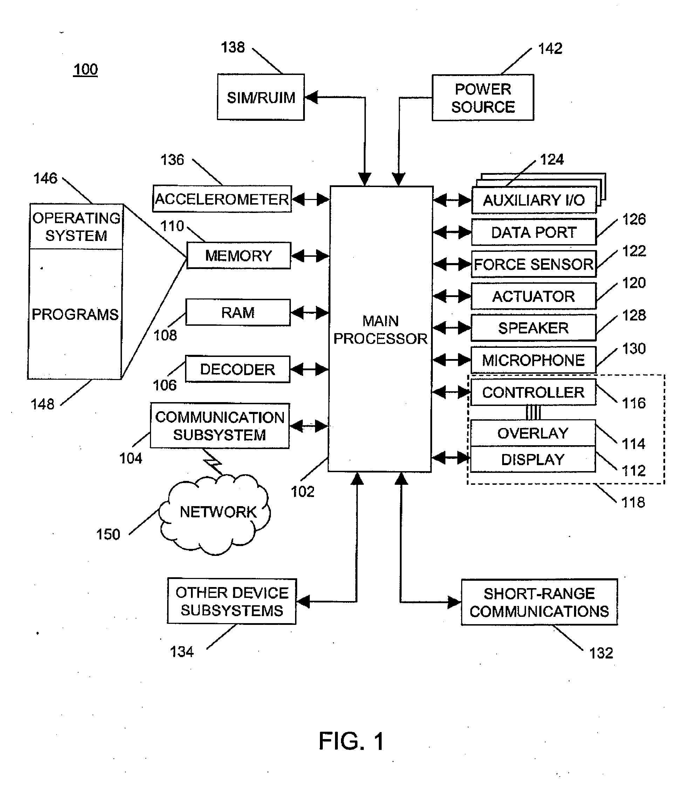

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, links, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 provides the user with tactile feedback.

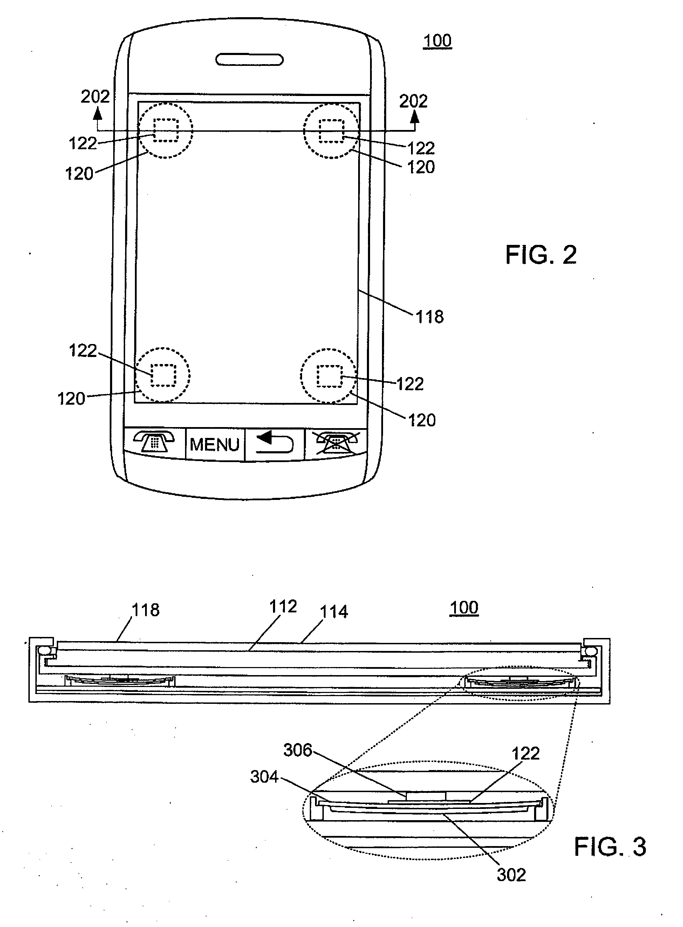

The actuator 120 may comprise one or more piezoelectric (piezo) actuators that provide tactile feedback. FIG. 2 is front view of an example of a portable electronic device 100. In the example shown in FIG. 2, the actuator 120 comprises four piezo actuators 120, each located near a respective corner of the touch-sensitive display 118. FIG. 3 is a sectional side view of the portable electronic device 100 through the line 202 of FIG 2. Each piezo actuator 120 is supported within the portable electronic device 100 such that contraction of the piezo actuators 120 applies a force against the touch-sensitive display 118. opposing a force externally applied to the display 118. Each piezo actuator 120 includes a piezoelectric device 302, such as a piezoelectric disk adhered to a substrate 304, such as a metal substrate. An element 306 that is advantageously at least partially flexible and comprises, for example, hard rubber may be located between the piezoelectric device 302 and the touch-sensitive display 118. The element 306 does not substantially dampen the force applied to or on the touch-sensitive display 118. In the example shown in FIG. 2 and FIG. 3, the force sensor 122 comprises four force-sensors 122 located between the element 306 and the substrate 304. The force sensors 122 are utilized to determine a value related to the force at each of the force sensors 122 when an external force is applied to the touch-sensitive display 118. The substrate 304 bends when the piezoelectric device 302 contracts diametrically due to build up of charge at the piezoelectric device 302 or in response to an external force applied to the touch-sensitive display 118. The charge may be adjusted by varying the applied voltage or current, thereby controlling the force applied by the piezo actuators 120 on the touch-sensitive display 118. The charge on the piezo actuators 120 may be removed by a controlled discharge current that causes the piezoelectric devices 302 to expand diametrically, decreasing the force applied by the piezo actuators 120 on the touch-sensitive display 118. Absent an external force applied to the touch-sensitive display 118 and absent a charge on the piezoelectric device 302, the piezo actuator 120 may be slightly bent due to a mechanical preload.

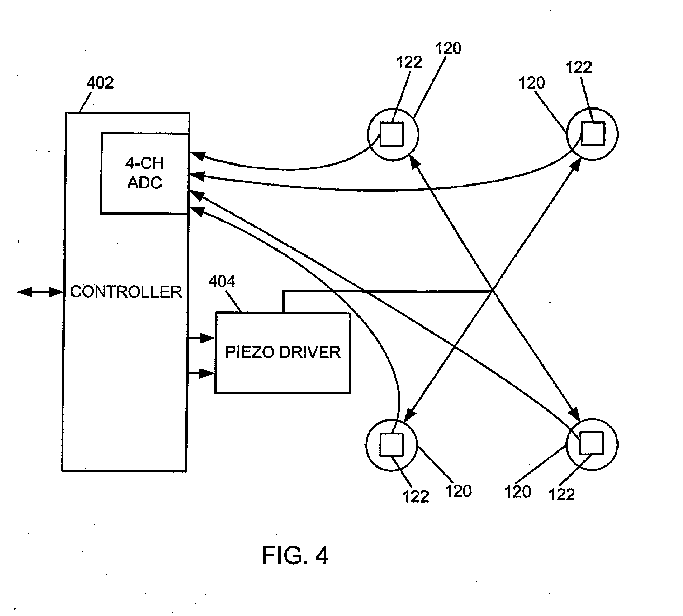

A functional block diagram of components of the portable electronic device 100 is shown in FIG. 4. In this example, each force sensor 122 is connected to a controller 402, which includes an amplifier and analog-to-digital converter (ADC). The force sensors 122 may be, for example, force-sensing resistors in an electrical circuit such that the resistance changes with force applied to the force sensors 122. As applied force on the touch-sensitive display 118 increases, the resistance decreases. This change is determined via the controller 116 for each of the force sensors 122, and a value representative of the force at each of the force sensors 122 is determined.

The piezo actuators 120 are connected to a piezo driver 404 that communicates with the controller 402. The controller 402 is also in communication with the main processor 102 of the portable electronic device 100 and may receive and provide signals to and from the main processor 102. The piezo actuators 120 and the force sensors 122 are operatively connected to the main processor 102 via the controller 402. The controller 402 controls the piezo driver 404 that controls the current/voltage to the piezoelectric devices 302 and thus controls the charge and the force applied by the piezo actuators 120 on the touch-sensitive display 118. Each of the piezoelectric devices 302 may be controlled substantially equally and concurrently. Optionally, the piezoelectric devices 302 may be controlled separately. Switches, actuators, keys, and so forth may be simulated, or a non-simulated tactile feedback may be provided by controlling the piezoelectric devices 302. For example, when an applied force, on the touch-sensitive display 118, exceeds a depression threshold, the charge at the piezo actuators 120 is modulated to impart a force on the touch-sensitive display 118 to simulate depression of a dome switch. When the applied force, on the touch-sensitive display 118, falls below a release threshold, after simulation of depression of a dome switch, the charge at the piezo actuators 120 is modulated to impart a force, by the piezo actuators 120, to simulate release of a dome switch.

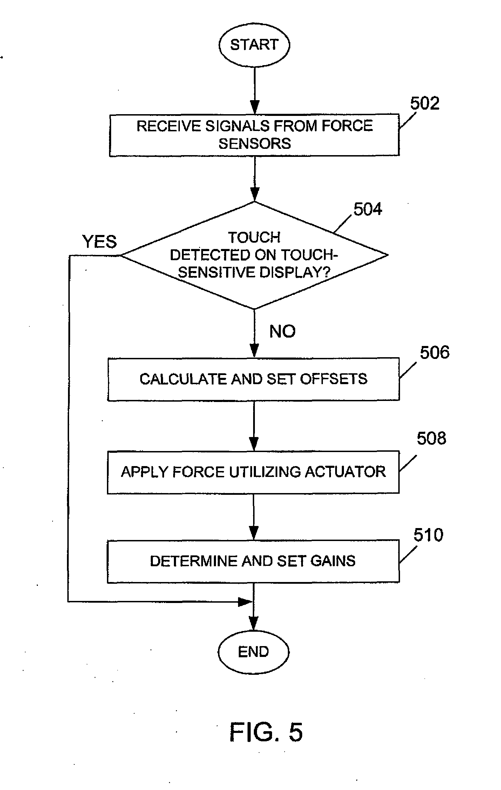

A flowchart illustrating a method of controlling the electronic device 100 is shown in FIG. 5. The method may be carried out by software executed by, for example, the processor 102. Coding of software for carrying out such a method is within the scope of a person of ordinary skill in the art given the present description. The method illustrated in FIG. 5 may be carried out automatically. Automatic calibration may be carried out at preset intervals in time, when the portable electronic device 100 is turned to an on or awake state, prior to turning off or entering a sleep mode, or at any other suitable time. Optionally, the method may be carried out in response to selection of an option to calibrate the force sensors.

The resistance value at each of the force sensors 122 is determined 502 based on signals from the force sensors 122. Signals, from the force-sensors 122, may be repeatedly received when the portable electronic device 100 in an on or awake state.

When a touch is detected 504 on the touch-sensitive display 118, the process ends. For example, a touch may be detected when a signal, e.g., including touch information, is generated by the touch-sensitive overlay 114 and sent to the controller 116. When no signal from the overlay 114 is present at the controller 116, a touch is considered "not detected" on the touch-sensitive display 118. When a touch is not detected 504, the process continues at 506, where the value of the force is determined from the signals received at 502. The actuators 120 are not actuated at this time and the magnitude of the force applied by the actuators is zero. The force sensor 122 may be calibrated based on the value of the force determined and the magnitude of the force applied by the actuator 120, which should be zero at this time. The offset for the force sensor 122 is set 506 such that the value of the force, determined based on the resistance value from each of the force sensors, is zero.

The force applied 508 by the actuators 120 has a magnitude. For example, when the actuator 120 is a piezo actuator, the voltage across the actuator 120 has a known relation to the magnitude of the force applied by the actuator 120. The magnitude may be stored in the portable electronic device 100. One or more magnitudes of force may be stored. The gain value for the force sensor 122 is set 510 such that the force, as determined from the resistance at the force sensor 122, is substantially equal to the magnitude of the force at the force sensor 122 applied by the actuator 120. The calibration is carried out separately for each force sensor 122 utilizing information obtained from the respective force sensor 122. A single application of force by the actuator 120 may be utilized to separately calibrate each force sensor 122. Optionally, a separator application of force by the actuator 120 may be utilized to calibrate each force sensor 122.

Calibration is carried out when a touch is not present on the touch-sensitive display 118. The offset and gain values are not calibrated while a touch is detected on the touch-sensitive display 118 because the magnitude of the applied force of the touch may not be known and accurate values for gains and offsets may not result.

In addition to the actuators 120 described above, the portable electronic device 100 may include a vibrator motor operable to vibrate the touch-sensitive display 118, for example, to provide tactile feedback. The vibrator motor is configured to apply a compressive force on force sensors 122 during vibration of the touch-sensitive display 118. When the vibrator motor is actuated, the magnitude of the compressive force on the force sensor(s) 122 and the frequency of the vibration are known, for example, from prior measurements, the results of which are stored in the portable electronic device 100.

The resistance value at each force sensor 122 is determined 502 based on signals from the force sensor 122. When a touch is detected 504 on the touch-sensitive display 118, the process ends. When a touch is not detected 504, the process continues at 506 where the offset for the force sensor 122 is set 506 such that the value of the force, determined based on the resistance value from the force sensor, is zero. The vibrator motor is actuated to apply 508 a force on the force sensor 122. The magnitude of the oscillating force is known and the resulting change in force at the force sensor may be determined based on the location of application of the force by the vibrator motor, the location of the force sensor 122, and the magnitude of the oscillating force, which may be stored in the portable electronic device 100. The resulting force at the force sensor 122 may be determined, for example, by a force balance. A gain value for the force sensor is set 510 such that the value of the force, as determined from the resistance at the force sensor 122, is equal to the magnitude of the force, at the force-sensors 122, from the vibrator motor. The process is carried out separately for each of the force-sensors.

Force sensors such as force-sensing resistors, may be utilized in the electronic device to determine applied force when a touch is received on the touch-sensitive display. Force-sensing resistors tend to drift out of calibration with time, temperature, humidity, use, entropy, and so forth. Application of the force of known magnitude, utilizing an actuator, facilitates calibration of the force-sensing resistors and such a calibration may be carried out at regular intervals.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
when a touch is not detected on a touch-sensitive display (118) of a portable electronic device (100), applying, utilizing an actuator (120) within the portable electronic device (100), a force on the touch-sensitive display (118) of the portable electronic device (100);
measuring, utilizing a force sensor (122), a value resulting from the force at the force sensor (122);
calibrating the force sensor (122) based on the value and a known magnitude of the force at the force sensor (122).

2. The method according to claim 1, wherein measuring the value comprises measuring values at a plurality of force sensors (122) and calibrating comprises calibrating the plurality of force sensors (122) based on the values resulting from the force and the known magnitude of the force at the force sensors (122).

3. The method according to claim 1, wherein the force sensor (122) comprises a force-sensing resistor.

4. The method according to claim 1, wherein calibrating comprises adjusting a gain for the force sensor (122).

5. The method according to claim 1, comprising calibrating the force sensor (122) when the actuator (120) is not actuated.

6. The method according to claim 1, comprising adjusting an offset for the force sensor (122) when the actuator (120) is not actuated.

7. The method according to claim 1, comprising adjusting an offset for the force sensor (122) such that a magnitude of a force determined from the force sensor (122) is zero when the actuator (120) is not actuated.

8. The method according to claim 1, comprising adjusting a gain for the force sensor (122) such that a magnitude of a force determined from the force sensor (122) is equal to the known magnitude of the force at the force sensor (122) when the actuator (120) is actuated.

9. The method according to claim 1, wherein the actuator (120) comprises at least one piezoelectric device utilized to provide tactile feedback through the touch-sensitive display (118).

10. The method according to claim 1, wherein the actuator (120) comprises a vibrator motor utilized to provide tactile feedback.

11. A computer-readable medium having computer-readable code executable by at least one processor (102) of a portable electronic device (100) to perform the method of any one of claims 1 to 10.

12. An electronic device (100) comprising:
a touch-sensitive display (118);
an actuator (120) configured to apply a force to the touch-sensitive display (118);
a force sensor (122) configured to determine a value resulting from the force; and
at least one processor (102) operably connected to the touch-sensitive display (118), the actuator (120), and the force sensor (122) and configured to calibrate the force sensor (122) based on the value and a known magnitude of the force at the force sensor (122) when a touch is not detected on the touch-sensitive display (118).

13. The electronic device (100) according to claim 12, wherein the force sensor (122) comprises a force-sensing resistor.

14. The electronic device (100) according to claim 12, wherein the actuator (120) comprises a piezoelectric actuator.

15. The electronic device (100) according to claim 12, wherein the actuator (120) comprises a vibrator motor.

16. The electronic device (100) according to claim 12, wherein the force sensor (122) is calibrated by adjusting an offset such that a magnitude of a force determined from the force sensor (122) is zero when the actuator (120) is not actuated.

17. The electronic device (100) according to claim 12, wherein the force sensor (122) is calibrated by adjusting a gain such that a magnitude of a force determined from the force sensor (122) is substantially equal to the known magnitude of the force at the force sensor (122) when the actuator (120) is actuated.

## Patentansprüche

1. Ein Verfahren, das aufweist:
wenn keine Berührung auf einer berührungsempfindlichen Anzeige (118) einer tragbaren elektronischen Vorrichtung (100) erfasst wird, Anwenden,
unter Verwendung eines Aktuators (120) in der tragbaren elektronischen Vorrichtung (100), einer Kraft auf die berührungsempfindliche Anzeige (118) der tragbaren elektronischen Vorrichtung (100);
Messen, unter Verwendung eines Kraftsensors (122), eines Werts, der aus der Kraft an dem Kraftsensor (122) resultiert;
Kalibrieren des Kraftsensors (122) basierend auf dem Wert und einer bekannten Größe der Kraft an dem Kraftsensor (122).

2. Das Verfahren gemäß Anspruch 1, wobei das Messen des Werts ein Messen von Werten an einer Vielzahl von Kraftsensoren (122) aufweist und das Kalibrieren ein Kalibrieren der Vielzahl von Kraftsensoren (122) basierend auf den Werten aufweist, die aus der Kraft und der bekannten Größe der Kraft an den Kraftsensoren (122) resultieren.

3. Das Verfahren gemäß Anspruch 1, wobei der Kraftsensor (122) einen Krafterfassungswiderstand aufweist.

4. Das Verfahren gemäß Anspruch 1, wobei das Kalibrieren ein Anpassen einer Verstärkung für den Kraftsensor (122) aufweist.

5. Das Verfahren gemäß Anspruch 1, das ein Kalibrieren des Kraftsensors (122) aufweist, wenn der Aktuator (120) nicht betätigt wird.

6. Das Verfahren gemäß Anspruch 1, das aufweist ein Anpassen eines Offsets für den Kraftsensor (122), wenn der Aktuator (120) nicht betätigt wird.

7. Das Verfahren gemäß Anspruch 1, das aufweist ein Anpassen eines Offsets für den Kraftsensor (122) derart, dass eine Größe einer Kraft, die von dem Kraftsensor (122) bestimmt wird, Null ist, wenn das Aktuator (120) nicht betätigt wird.

8. Das Verfahren gemäß Anspruch 1, das aufweist ein Anpassen einer Verstärkung für den Kraftsensor (122) derart, dass eine Größe einer Kraft, die von dem Kraftsensor (122) bestimmt wird, gleich zu der bekannten Größe der Kraft an dem Kraftsensor (122) ist, wenn der Aktuator (120) betätigt wird.

9. Das Verfahren gemäß Anspruch 1, wobei der Aktuator (120) zumindest eine piezoelektrische Vorrichtung aufweist, die verwendet wird, um eine taktile Rückmeldung durch die berührungsempfindliche Anzeige (118) vorzusehen.

10. Das Verfahren gemäß Anspruch 1, wobei der Aktuator (120) einen Vibrationsmotor aufweist, der verwendet wird, um eine taktile Rückmeldung vorzusehen.

11. Ein computerlesbares Medium mit computerlesbarem Code, der durch zumindest einen Prozessor (102) einer tragbaren elektronischen Vorrichtung (100) ausführbar ist, um das Verfahren gemäß einem der Ansprüche 1 bis 10 durchzuführen.

12. Eine elektronische Vorrichtung (100), die aufweist:
eine berührungsempfindliche Anzeige (118);
einen Aktuator (120), der konfiguriert ist zum Anwenden einer Kraft auf die berührungsempfindliche Anzeige (118);
einen Kraftsensor (122), der konfiguriert ist zum Bestimmen eines Werts,
der aus der Kraft resultiert; und
zumindest einen Prozessor (102), der betriebsfähig mit der berührungsempfindlichen Anzeige (118), dem Aktuator (120) und dem Kraftsensor (122) verbunden ist und konfiguriert ist zum Kalibrieren des Kraftsensors (122) basierend auf dem Wert und einer bekannten Größe der Kraft an dem Kraftsensor (122), wenn keine Berührung auf der berührungsempfindlichen Anzeige (118) erfasst wird.

13. Die elektronische Vorrichtung (100) gemäß Anspruch 12, wobei der Kraftsensor (122) einen Krafterfassungswiderstand aufweist.

14. Die elektronische Vorrichtung (100) gemäß Anspruch 12, wobei der Aktuator (120) einen piezoelektrischen Aktuator aufweist.

15. Die elektronische Vorrichtung (100) gemäß Anspruch 12, wobei der Aktuator (120) einen Vibrationsmotor aufweist.

16. Die elektronische Vorrichtung (100) gemäß Anspruch 12, wobei der Kraftsensor (122) kalibriert ist durch Anpassen eines Offsets derart, dass eine Größe einer Kraft, die von dem Kraftsensor (122) bestimmt wird, Null ist, wenn das Aktuator (120) nicht betätigt wird.

17. Die elektronische Vorrichtung (100) gemäß Anspruch 12, wobei der Kraftsensor (122) kalibriert ist durch Anpassen einer Verstärkung derart, dass eine Größe einer Kraft, die von dem Kraftsensor (122) bestimmt wird, im Wesentlichen gleich zu der bekannten Größe der Kraft an dem Kraftsensor (122) ist, wenn der Aktuator (120) betätigt wird.

## Revendications

1. Procédé, comprenant :
lorsqu'un toucher n'est pas détecté sur un dispositif d'affichage à affleurement (118) d'un dispositif électronique portable (100), l'application, à l'aide d'un actionneur (120) à l'intérieur du dispositif électronique portable (100), d'une force sur le dispositif d'affichage à affleurement (118) du dispositif électronique portable (100) ;
la mesure, à l'aide d'un capteur de force (122), d'une valeur résultant de la force au niveau du capteur de force (122) ;
l'étalonnage du capteur de force (122) en fonction de la valeur et d'une amplitude connue de la force au niveau du capteur de force (122).

2. Procédé selon la revendication 1, dans lequel la mesure de la valeur comprend la mesure de valeurs au niveau d'une pluralité de capteurs de force (122), et l'étalonnage comprend l'étalonnage de la pluralité de capteurs de force (122) en fonction des valeurs résultant de la force et de l'amplitude connue de la force au niveau des capteurs de force (122).

3. Procédé selon la revendication 1, dans lequel le capteur de force (122) comprend une résistance de détection de force.

4. Procédé selon la revendication 1, dans lequel l'étalonnage comprend le réglage d'un gain pour le capteur de force (122).

5. Procédé selon la revendication 1, comprenant l'étalonnage du capteur de force (122) lorsque l'actionneur (120) n'est pas actionné.

6. Procédé selon la revendication 1, comprenant le réglage d'un décalage pour le capteur de force (122) lorsque l'actionneur (120) n'est pas actionné.

7. Procédé selon la revendication 1, comprenant le réglage d'un décalage pour le capteur de force (122) de telle sorte qu'une amplitude d'une force déterminée à partir du capteur de force (122) soit nulle lorsque l'actionneur (120) n'est pas actionné.

8. Procédé selon la revendication 1, comprenant le réglage d'un gain pour le capteur de force (122) de telle sorte qu'une amplitude d'une force déterminée à partir du capteur de force (122) soit égale à l'amplitude connue de la force au niveau du capteur de force (122) lorsque l'actionneur (120) est actionné.

9. Procédé selon la revendication 1, dans lequel l'actionneur (120) comprend au moins un dispositif piézoélectrique utilisé pour délivrer une rétroaction tactile par l'intermédiaire du dispositif d'affichage à affleurement.

10. Procédé selon la revendication 1, dans lequel l'actionneur (120) comprend un moteur de vibreur utilisé pour délivrer une rétroaction tactile

11. Support lisible par un ordinateur, comportant un code lisible par ordinateur exécutable par au moins un processeur (102) d'un dispositif électronique portable (100) pour effectuer le procédé selon l'une quelconque des revendications 1 à 10.

12. Dispositif électronique (100), comprenant :
un dispositif d'affichage à affleurement (118) ;
un actionneur (120) configuré de façon à appliquer une force au dispositif d'affichage à affleurement (118) ;
un capteur de force (122) configuré de façon à déterminer une valeur résultant de la force ; et
au moins un processeur (102) connecté de façon fonctionnelle au dispositif d'affichage à affleurement (118), à l'actionneur (120) et au capteur de force (122), et configuré de façon à étalonner le capteur de force (122) en fonction de la valeur et d'une amplitude connue de la force au niveau du capteur de force (122) lorsqu'un toucher n'est pas détecté sur le dispositif d'affichage à affleurement (118).

13. Dispositif électronique (100) selon la revendication 12, dans lequel le capteur de force (122) comprend une résistance de détection de force.

14. Dispositif électronique (100) selon la revendication 12, dans lequel l'actionneur (120) comprend un actionneur piézoélectrique.

15. Dispositif électronique (100) selon la revendication 12, dans lequel l'actionneur (120) comprend un moteur de vibreur.

16. Dispositif électronique (100) selon la revendication 12, dans lequel le capteur de force (122) est étalonné par le réglage d'un décalage de telle sorte que l'amplitude d'une force déterminée à partir du capteur de force (122) soit nulle lorsque l'actionneur (120) n'est pas actionné.

17. Dispositif électronique (100) selon la revendication 12, dans lequel le capteur de force (122) est étalonné par le réglage d'un gain de telle sorte que l'amplitude d'une force déterminée à partir du capteur de force (122) soit sensiblement égale à l'amplitude connue de la force au niveau du capteur de force (122) lorsque l'actionneur (120) est actionné.
